# EUROPEAN PATENT APPLICATION

(11) **EP 4 700 854 A1**
(43) Date of publication of application: **25.02.2026**
(21) Application number: 24851685.8
(22) Date of filing: 30.07.2024
(51) Int. Cl.: H01M 4/139, H01M 4/13, H01M 4/36, H01M 4/38, H01M 4/505, H01M 4/525, H01M 4/58, H01M 10/052, H01M 10/54

(54) **METHOD FOR PRODUCING ELECTRODE ACTIVE MATERIAL, ELECTRODE, AND LITHIUM ION BATTERY**

(30) Priority: 10.08.2023 JP 2023130973
(71) Applicant: FUJI PIGMENT Co., Ltd., Hyogo 6660015 (JP); GS Alliance Co., Ltd., Hyogo, 6660015 (JP)
(72) Inventor: MORI Ryohei, Kawanishi-shi, Hyogo 6660015 (JP)
(74) Representative: Maiwald GmbH
(86) International application number: PCT/JP2024/027193
(87) International publication number: WO 2025/033260

(57) **Abstract**

An electrode active material according to the present invention is produced by performing a heat treatment after adding a plurality of metal salts which each contain metal components that are Li, Ni, Co, and Mn or Al to black mass that is obtained by processing used lithium-ion batteries, so that the black mass and the metal salts are reacted with each other. It is preferable that the addition amount of the metal salts is 10-25 parts by weight relative to 100 parts by weight of the black mass. This lithium-ion battery has a positive electrode 4, a negative electrode 6, and an electrolyte 8. A positive electrode active material 3, which serves as a main body of the positive electrode 4, is formed of an electrode active material that is produced as described above. By directly using the black powder of the black mass, it is possible to achieve an electrode active material, an electrode, and a lithium-ion battery, which have high practicality and are capable of ensuring desired battery properties without requiring much time and effort such as recovery of metal salts from black mass and purification of the metal salts or the like.

## Description

### TECHNICAL FIELD

The present invention relates to a method for producing an electrode active material, an electrode, and a lithium-ion battery, and more particularly to a method for producing an electrode active material by using a black mass, an electrode having an electrode active material produced by the above production method, and a lithium-ion battery in which a positive electrode active material is formed of the electrode active material.

### BACKGROUND ART

With the market expansion of mobile electronic devices such as cellular phones, laptop personal computers, and tablet devices, secondary batteries have been actively developed as cordless power resources of these electronic devices. Further, in view of global warming, depletion of petroleum resources, and the like, electric vehicles and hybrid vehicles using a secondary battery as a power source have been actively developed.

Under such circumstances, secondary batteries which use alkali metal ions such as lithium ions as a charge carrier and use an electrochemical reaction associated with giving and receiving of charges of charge carrier, has been developed. In particular, lithium-ion batteries having a high energy density are widely available at present.

The electrode active material among the constituents of the lithium-ion battery, is a material that directly contributes to a battery electrode reaction such as a charge reaction and a discharge reaction, and performs charging and discharging using an insertion reaction and a desorption reaction of lithium ions regarding the electrode active material, and thus has a central role in the lithium-ion battery.

In this type of lithium-ion battery, although LiCoO₂ (lithium cobalt oxide) has been used for an electrode active material, particularly a positive electrode active material, at the beginning of development, in recent years, since Co is expensive, and there is a demand for higher capacity and lower cost accompanied by expansion of applications of battery, a ternary material in which a part of Co is substituted with Ni and/or Mn has attracted attention, and a lithium-ion battery using the ternary material as a positive electrode active material has been actively studied and developed.

However, while the demand for lithium-ion batteries is expected to further increase in the future, all of Li and Co, Ni, and Mn constituting the ternary materials are rare metals, and it may be difficult to ensure supply of raw materials in the future.

Thereupon, in recent years, a technique for recovering a material of a lithium-ion battery from black powder called "black mass" obtained by processing a used lithium-ion battery and recycling the material has attracted attention.

For example, Document 1 proposes a method for recovering and purifying valuable metals containing one or more of Ni, Mn, Co, and Li from a black mass obtained from recycling of a lithium-ion battery.

In Document 1, a black mass is subjected to reduced acid leaching to prepare an acid leach slurry containing an acidic pregnant leach solution containing valuable metals (Ni, Mn, and Co) and impurities and an insoluble substance, the insoluble substance is separated and removed from the acidic pregnant leach solution, and then the pH of the acidic pregnant leach solution is adjusted to precipitate and remove impurities from the acidic pregnant leach solution. Next, an ion exchange resin is then used to remove residual impurities in the acidic pregnant leach solution, followed by regeneration of the ion exchange resin using a Li basic solution and preparation of a mixed precipitation slurry using the Li basic solution. Then, the pH of the acidic pregnant leach solution is adjusted to separate the solution into a mixed precipitate containing valuable metals and a Li-containing solution, thereby a metal salt to be a precursor of the ternary positive electrode active material is recovered from the mixed precipitate, and further, the Li-containing solution is subjected to salt decomposition and crystallization to recover Li₂CO₃ serving as a Li source.

That is, in Document 1, a precursor of a ternary positive electrode active material containing Li and Li₂CO₃ are recovered from the black mass by a chemical process to reuse resources.

Document 2 proposes a method for extracting a metal from a black mass of a lithium-ion battery, as well as Document 1.

Specifically, in Document 2, a fraction of a non-metallic material is separated from a black mass, and a black mass containing an anode material and a cathode material is recovered. Next, sulfur dioxide and a gas containing molecular oxygen as extractants are added to a sulfuric acid-containing solution to perform acid leaching, the cathode material in the black mass is dissolved to recover the leach solution containing the cathode material, an initial fraction of the metal material is separated from the leach solution, and a main fraction containing at least one of Mn, Co, Ni, and Li is recovered.

That is, in Document 2, after the non-metal components are removed from the black mass by the pretreatment, the initial fraction of the metal material is sequentially separated and recovered from each leaching solution containing the cathode material using sulfuric acid and an extractant, and thereby resources are intended to be reused.

Document 3 proposes a method for recovering a metal group from a waste battery, a waste positive electrode material, or a mixture thereof containing a metal group consisting of at least two of Co, Ni, and Mn and impurities, the method including removing impurities from the waste battery, the waste positive electrode material, or the mixture thereof, and then recovering the metal group as a mixture of metal salts.

Specifically, in Document 3, a leachate is prepared by leaching a waste battery, a waste positive electrode material, or a mixture thereof with sulfuric acid, and when impurities such as Fe, Cr, Cu, F, and C are contained, the pH of the leachate is adjusted to precipitate and remove the impurities or the impurities are separated to the solvent side by solvent extraction, and then the impurities are removed from the leachate by solid-liquid separation to recover metal salts of Co, Ni, and Mn. And thereby, it is possible to recover respective metal salts of Mn, Co, and Ni as a mixture of metal salts from the leachate without separating the waste battery and the waste positive electrode material into the respective metal salts of Mn, Co, and Ni. Therefore, it is not necessary to separate the waste battery and the waste positive electrode material individually, and it is intended to reduce the regeneration cost of the positive electrode material.

As described above, in Documents 1 to 3, after impurities in the black mass (waste battery, waste positive electrode material) are removed by a wet process, a metal salt or a mixture thereof or a metal fraction (hereinafter, referred to as "metal salt or the like") is separated and recovered, and resources are circulated to be used for producing a new battery.

### Citation List

### Patent Documents

Document 1: JP 2023-174586A (Claim 11, paragraphs [0028] to [0029], FIG. 1, and so on)
Document 2: JP 2024-516955A (Claim 1, paragraphs [0063] to [0066], FIGS. 2a and 2b, and so on)
Document 3: JP 2014-156649A (Claims 1 to 3, paragraphs [0029] and [0050])

### SUMMARY OF INVENTION

### Technical Problem

However, in the above Documents 1 to 3, a processing step of extracting a battery material from a black mass, separating the battery material, and recycling the battery material is complicated, the cost required for equipment is also expensive, and results in high cost, so that it is inferior in practicality.

The present invention has been made in view of such a situation, and it is an object of the invention to provide a method for producing an electrode active material capable of obtaining a highly practical electrode active material capable of ensuring desired battery properties by reusing resources without requiring time and effort such as recovery and purification of a metal salt from black mass, an electrode having an electrode active material produced by the above production method, and a lithium-ion battery using the above electrode active material as a positive electrode active material.

### Solution to Problem

The present inventor has made studies in order to achieve the above object, and consequently have found that by adding a small amount of each metal salt containing Li, Co, Ni, and Mn or Al which constitutes an electrode active material to a black mass and performing a heat treatment, the black mass and the metal salt react with each other to bond a metal component to the black mass, thereby a highly practical electrode active material capable of ensuring desired battery properties can be obtained.

The present invention has been made based on such findings, and a method for producing an electrode active material according to the present invention includes adding a plurality of metal salts containing each metal component of Li, Ni, Co, and Mn or Al to a black mass obtained by processing a used lithium-ion battery, and performing a heat treatment to react the black mass with the metal salts to produce an electrode active material.

Consequently, it is possible to effectively use a used lithium-ion battery without requiring time and effort to recover a metal salt and a metal component from a black mass, and it is possible to obtain an electrode active material having desired battery performance with high practicality at low cost.

In the method for producing an electrode active material of the present invention, the amount of additive of the metal salts is more preferably 10 to 25 parts by weight relative to 100 parts by weight of the black mass.

Thus, an electrode active material having desired battery properties with practical value can be obtained only by adding a small amount of a predetermined metal salt to the black mass.

In the method for producing an electrode active material of the present invention, the heat treatment is preferably performed at a temperature of 700 to 900°C, and the heat treatment is preferably performed for 1 to 2 hours.

By appropriately adjusting the heat treatment temperature and the heat treatment time in this manner, an electrode active material having desired battery properties can be easily produced.

In the method for producing an electrode active material of the present invention, the plurality of metal salts are added to the black mass with a compound ratio adjusted so that one oxide selected from the group consisting of LiNi_{1/3}Mn_{1/3}Co_{1/3}O₂ (hereinafter, also referred to as "NMC111"), LiNi_{0.4}Mn_{0.3}Co_{0.3}O₂ (hereinafter, also referred to as "NMC433"), LiNi_{0.5}Mn_{0.2}Co_{0.3}O₂ (hereinafter, also referred to as "NMC523"), LiNi_{0.5}Mn_{0.3}Co_{0.2}O₂ (hereinafter, also referred to as "NMC532"), LiNi_{0.6}Mn_{0.2}Co_{0.2}O₂ (hereinafter, also referred to as "NMC622"), LiNi_{0.8}Mn_{0.1}Co_{0.1}O₂ (hereinafter, also referred to as "NMC811"), LiNi_{0.8}Co_{0.15}Al_{0.05}O₂ (hereinafter, also referred to as "NCA"), and a lithium-rich composition (hereinafter, also referred to as "lithium-rich NMC-based composition") represented by general formula: Li₁₊ₓNi_{2/(3+3y})Mn_{2x/(3+3y)}Co_{2/(3+3y)}O₂ (where x > 0 and y is a positive integer) can be formed when the plurality of metal salts are mixed and synthesized.

When the plurality of metal salts are mixed and synthesized as described above, an electrode active material having desired battery properties depending on various applications can be produced at low cost by appropriately compounding each metal component of Ni, Co, and Mn or Al so as to have a predetermined ratio.

An electrode according to the present invention contains an electrode active material produced by the above-described production method.

Consequently, since the electrode active material is produced by directly using the black mass, resource circulation can be efficiently performed, and a new and useful electrode for a battery can be obtained at low cost.

In the electrode of the present invention, the crystal structure of the electrode active material is a layered rock salt type.

Therefore, since the electrode active material has a crystal structure in which Li is disposed between a plurality of metal oxide layers containing Ni, Co, and Mn or Al, a battery reaction due to insertion/desorption of Li ions easily proceeds by two-dimensional diffusion of Li, and a desired lithium-ion battery can be obtained.

A lithium-ion battery according to the present invention comprises a positive electrode, a negative electrode, and an electrolyte, wherein the lithium-ion battery is configured to repeat a charge-discharge reaction by a battery electrode reaction using a lithium ion as a charge carrier, and the positive electrode active material as a main component of the positive electrode includes an electrode active material produced by the above-described production method.

As described above, since the positive electrode active material is formed of the electrode active material produced by the above-described production method, it is possible to obtain a new and useful lithium-ion battery that contributes to resource circulation by effectively using a used lithium-ion battery without requiring time and effort to recover and purify a metal salt from a black mass.

In the lithium-ion battery of the present invention, a negative electrode active material as a main component of the negative electrode is preferably formed of lithium metal.

By forming the negative electrode active material with lithium metal in this manner, it is possible to obtain a lithium-ion battery having a higher energy density than a case where a carbon-based material is used.

### Advantageous Effects of Invention

According to the method for producing an electrode active material of the present invention, since a plurality of metal salts containing each metal component of Li, Ni, Co, and Mn or Al are added to a black mass obtained by processing a used lithium-ion battery, and a heat treatment is performed to react the metal salts with the black mass to produce an electrode active material, it is possible to effectively utilize resources having the used lithium-ion battery without requiring time and effort to recover and purify the metal salt from the black mass unlike a conventional case, and it is possible to obtain a new and useful electrode active material having desired battery performance with high practicality at low cost.

Since the amount of additive of the metal salts is 10 to 25 parts by weight relative to 100 parts by weight of the black mass, the desired electrode active material described above can be obtained by performing a heat treatment at a temperature of 700 to 900°C for 1 to 2 hours only by adding a small amount of a predetermined metal salt to the black mass.

Since the plurality of metal salts are added to the black mass with a compound ratio adjusted so that one oxide selected from the group consisting of NMC111, NMC433, NMC523, NMC532, NMC622, NMC811, NCA, and a lithium-rich NMC -based composition can be formed when the plurality of metal salts are mixed and synthesized, a new and useful electrode active material corresponding to various use applications can be obtained at low cost.

According to the electrode of the present invention, since the electrode active material produced by the above-described production method is included, resource circulation can be efficiently performed, and a new and useful electrode for a battery can be obtained at low cost.

Since a crystal structure of this electrode active material is a layered rock salt type, a battery reaction due to insertion/desorption of Li ions easily proceeds by two-dimensional diffusion of Li, and a desired lithium-ion battery can be obtained.

According to the lithium-ion battery of the present invention, since the lithium-ion battery includes a positive electrode, a negative electrode, and an electrolyte and repeats a charge-discharge reaction by a battery electrode reaction using a lithium-ion as a charge carrier and a positive electrode active material as a main component of the positive electrode is formed of an electrode active material produced by the above-described production method, a novel and useful lithium-ion battery which contributes to recycling by effectively using a used lithium-ion battery can be easily obtained at low cost.

Since the negative electrode active material as a main component of the negative electrode is formed of lithium metal, it is possible to obtain a lithium-ion battery having a high energy density as compared with a case where the negative electrode is formed of a carbon-based material.

### BRIEF DESCRIPTION OF DRAWINGS

[FIG.1] FIG. 1 is a schematic sectional view showing an embodiment of a lithium-ion battery according to the present invention.
[FIG.2] FIG. 2 shows secondary electron images of Sample No. 1 on Example 1, in which FIG. 2(a) is at a magnification of 1000 times and FIG. 2(b) is at a magnification of 5000 times.
[FIG.3] FIG. 3 shows secondary electron images of Sample No. 2 (black mass), in which FIG. 3(a) is at a magnification of 1000 times and FIG. 3(b) is at a magnification of 5000 times.
[FIG.4] FIG. 4 shows secondary electron images of Sample No. 4 (reference sample), in which FIG. 4(a) is at a magnification of 1000 times and FIG. 4(b) is at a magnification of 5000 times.
[FIG.5] FIG. 5 is a profile showing an element mapping analysis of Sample No. 1.
[FIG.6] FIG. 6 is a profile showing an element mapping analysis of Sample No. 2.
[FIG.7] FIG. 7 is a profile showing an element mapping analysis of Sample No. 4.
[FIG.8] FIG. 8 is a profile showing X-ray diffraction spectra of Sample Nos. 1, 2, and 4.
[FIG.9] FIG. 9 is a view showing an example of temperature dependency of cycle properties.

### DESCRIPTION OF EMBODIMENTS

Next, an embodiment of the present invention will be described in detail.

An electrode active material as an embodiment of the present invention is produced by adding a plurality of metal salts containing each metal component of Li, Ni, Co, and Mn or Al to a black mass obtained by processing a used lithium-ion battery, and performing a heat treatment to react the black mass with the metal salts to produce an electrode active material.

Since the electrode active material can be produced only by adding a plurality of metal salts serving as metal sources of the electrode active material to the black mass and performing a heat treatment in this manner, it is possible to effectively use the used lithium-ion battery without requiring time and effort to recover the metal salt or the like from the black mass, and it is possible to obtain an electrode active material having a high capacity and high performance with high practicality at low cost.

That is, as described in the section of [BACKGROUND ART], materials constituting the ternary lithium-ion battery, particularly all of Li, Ni, Co, and Mn constituting the electrode active material are rare metals and may be difficult to secure supply in the future. Therefore, in recent years, attempts have been made to recover effective resources by using "black mass" obtained by processing a used lithium-ion battery, and use the recovered effective resources for production of new batteries.

The black mass is black powder obtained by after discharging the used lithium-ion battery, heating and drying the battery to evaporate an electrolytic solution, crushing and pulverizing them, extracting and removing unnecessary impurity elements, and sieving them.

However, although, conventionally, the black mass can be utilized for production of a new battery by being separated and recovered into a metal salt as a precursor of the electrode active material through resource circulation, a processing step such as extraction and separation is required before the raw material is recycled, and the processing step is complicated, so that the recycling cost is expensive, it is not efficient, and has been inferior in the practicability.

Thereupon, in the present embodiment, although a small amount of impurities such as C, F, Si, and Al derived from the lithium-ion battery are inevitably mixed in the black mass, since a large amount of oxides of Ni, Co, and Mn constituting the electrode active material are contained, a plurality of metal salts containing each metal component of Li, Ni, Co, and Mn or Al is added to the black mass and a heat treatment is performed so as to react the black mass with the metal salt, thereby preparing a new and useful electrode active material.

Herein, the amount of additive of the metal salts is not particularly limited as long as it is small enough to meet the problems of invention that is cost reduction and resource reuse, and is preferably, for example, 10 to 25 parts by weight relative to 100 parts by weight of the black mass. That is, when the amount of additive of the metal salts is less than 10 parts by weight relative to 100 parts by weight of the black mass, the content of the black mass becomes relatively large, and there is a possibility that battery properties such as cycle properties cannot be obtained sufficiently. On the other hand, when the amount of additive of the metal salts is more than 25 parts by weight relative to 100 parts by weight of the black mass, the amount of additive of the metal salts containing rare metals such as Co and Ni increases, which may cause an increase in cost. Moreover, on the contrary, deterioration of cycle performance may be caused, which is not preferable, as shown in Examples described later.

The compound ratio of the plurality of metal salts is not particularly limited as long as the metal salts contain Li, Ni, Co, and Mn or Al, but the plurality of metal salts can be added with the compound ratio adjusted so that a specific lithium-containing metal oxide can be formed when the metal salts are synthesized by mixing and heat treatment.

That is, the plurality of metal salts can be added to the black mass with a compound ratio adjusted so that, for example, NMC111, NMC433, NMC523, NMC532, NMC622, NMC811, NCA, furthermore a lithium-rich NMC-based composition can be formed when the metal salts are synthesized by mixing and heat treatment.

Herein, the lithium-rich NMC-based composition can be exemplified Li_{1.2}Ni_{0.13}Mn_{0.54}Co_{0.13}O₂, Li_{1.06}Ni_{0.22}Mn_{0.45}Co_{0.22}O₂, Li_{1.11}Ni_{0.17}Mn_{0.50}Co_{0.17}O₂, Li_{1.14}Ni_{0.13}Mn_{0.54}Co_{0.13}O₂, and Li_{1.17}Ni_{0.095}Mn_{0.57}Co_{0.095}O₂.

In addition, the kind of each of metal salt is not particularly limited as long as each of metal salts contains Li, Ni, Co, and Mn or Al. For example, in the case of a Li source, Li₂CO₃ can be used, in the case of a Ni source, Ni(NO₃)₂·6H₂O can be used, in the case of a Mn source, (CH₃COO)₂Mn·4H₂O can be used, in the case of a Co source Co(NO₃)₂·6H₂O can be used, and in the case of an Al source, AlCl₃·6H₂O can be used.

Also, although the heat treatment temperature is also not particularly limited, it is usually preferably in the range of 700°C to 900°C. In a low temperature in which the heat treatment temperature is less than 700°C, crystallization cannot be sufficiently performed. Therefore, it may be difficult to obtain a desired capacity density. On the other hand, when the heat treatment temperature is a high temperature of more than 900°C, crystallization may excessively proceed, and therefore, the migration of Li ions may be inhibited, leading to deterioration of cycle properties.

Further, although the heat treatment time is not also particularly limited, it is preferably about 1 to 2 hours. In a short time in which the heat treatment time is less than 1 hour, crystallization cannot be sufficiently performed, and therefore, it may be difficult to obtain a desired capacity density. On the other hand, when the heat treatment time is more than 2 hours, crystallization may excessively proceed, and therefore, the migration of Li ions may be inhibited, leading to deterioration of cycle properties.

As is apparent from Examples described later, the crystal structure of the present electrode active material has a layered rock salt type. That is, metal oxide layers containing Ni, Co, and Mn or Al are formed in layers having predetermined spaces, and a lithium layer is interposed between the metal oxide layers. Then, Li ions in the lithium layer are two-dimensionally diffused to lead an insertion reaction and a desorption reaction, and charging and discharging are performed.

Incidentally, it is not preferable that only a lithium salt such as Li₂CO₃ is simply added to the black mass and the heat treatment is performed because the cycle properties significantly deteriorate as compared with the case of the black mass alone. That is, in order to obtain a desired electrode active material, it is considered to be important to add a metal salt containing Ni, Co, and Mn or Al and perform a heat treatment to form a metal oxide layer with appropriately improved crystallinity.

As described above, according to the method for producing an electrode active material in the present embodiment, since a plurality of metal salts containing each metal component of Li, Ni, Co, and Mn or Al is added to a black mass obtained by processing a used lithium-ion battery, and a heat treatment is performed to react the metal salts with the black mass to produce an electrode active material, it is possible to effectively utilize the used lithium-ion battery without recovering the metal salts and the metal components from the black mass. Therefore, it is possible to obtain an electrode active material having practicable battery performance at low cost.

Next, a lithium-ion battery using the above electrode active material will be described.

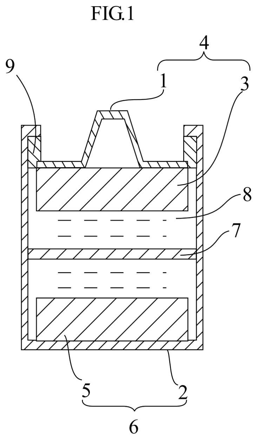

FIG. 1 is a schematic sectional view showing a lithium-ion battery according to the present invention, and in the present embodiment, the present electrode active material is used for a positive electrode active material.

The lithium-ion battery has a cap-shaped positive electrode current collector 1 formed by Al or the like which also serves as a positive electrode case, and a closed-end cylindrical-shaped negative electrode current collector 2 formed by Cu or the like which also serves as a negative electrode case. A positive electrode active material layer 3 is formed on one side of main surface of the positive electrode current collector 1, and the positive electrode current collector 1 and the positive electrode active material layer 3 constitute a positive electrode 4. A negative electrode active material layer 5 is formed at the bottom center of the negative electrode current collector 2, and the negative electrode current collector 2 and the negative electrode active material layer 5 constitute a negative electrode 6. A separator 7 formed of a porous sheet or film such as a microporous film, a woven fabric, or a nonwoven fabric is disposed between the positive electrode active material layer 3 and the negative electrode active material layer 5, and the internal space is filled with an electrolytic solution 8. The positive electrode current collector 1 and the negative electrode current collector 2 are sealed with a gasket 9 interposed therebetween.

The negative electrode active material used for the negative electrode active material layer 5 is not particularly limited, and lithium metal, a carbon-based material such as graphite or graphene, lithium titanate can be used, furthermore it is preferable to use lithium metal from the viewpoint of obtaining a high energy density.

Next, an embodiment of a method for producing the above-mentioned lithium-ion battery will be described in detail.

First, the positive electrode active material is formed into an electrode shape. For example, the positive electrode active material is mixed with a conductive aid and a binder, thereafter a solvent is added to the mixture to form a slurry, and the slurry is applied onto the positive electrode current collector 1 by any coating method and dried to form the positive electrode active material layer 3 on one side of main surface of the positive electrode current collector 1, thereby obtaining the positive electrode 4.

Herein, the conductive aid is not particularly limited, and for example, conductive carbon such as graphite, carbon black, and acetylene black, carbon fibers such as carbon nanotubes and carbon nanohorn, and conductive polymers such as polyaniline, polypyrrole, polythiophene, polyacetylene, and polyacene can be used. Two or more kinds of conductive aids may be mixed and used.

Also, the binder is not particularly limited, and various resins such as polyvinylidene fluoride, polyethylene, polyhexafluoropropylene, polytetrafluoroethylene, polyethylene oxide, and carboxymethyl cellulose can be used.

Moreover, the solvent is not particularly limited, and for example, a basic solvent such as N-methyl-2-pyrrolidone, dimethyl sulfoxide, dimethylformamide, propylene carbonate, diethyl carbonate, dimethyl carbonate, or γ-butyrolactone, a nonaqueous solvent such as acetonitrile, tetrahydrofuran, nitrobenzene, or acetone, a protic solvent such as methanol or ethanol, furthermore water can be used.

The kind of the organic solvent, the mixing ratio of the organic compound to the organic solvent, the kind of the additive, the additive amount thereof can be set optionally.

Next, the negative electrode 6 is formed by placing the negative electrode active material layer 5 on the bottom center of the closed-end cylindrical-shaped negative electrode current collector 2, and the negative electrode 6 is impregnated with the electrolyte 8, thereby the electrolyte 8 is infiltrated with the negative electrode 6. Furthermore, the positive electrode 4 is infiltrated with the electrolyte 8, and the separator 7 with which the electrolyte 8 has been impregnated is arranged in the negative electrode case, and subsequently, the electrolyte 8 is injected into the internal space. Then, the gasket 9 is arranged on the peripheral edge, and the negative electrode current collector 2 and the positive electrode current collector 1 are fixed and externally sealed with machine such as a caulking machine, thereby preparing a lithium-ion battery.

The electrolyte 8 is interposed between the positive electrode 4 and the negative electrode 6 as a counter electrode to perform charge carrier transport between both electrodes. As such an electrolyte 8, an electrolytic solution obtained by dissolving an electrolyte salt in an organic solvent, a polymer-based electrolytic solution obtained by adding a polymer such as polyethylene oxide to the electrolytic solution, or an ionic liquid-based electrolytic solution obtained by dissolving an electrolyte salt using an ionic liquid such as 1-ethyl-3-methylimidazolium tetrafluoroborate can be used.

Herein, as the electrolyte salt, for example, various lithium salts such as LiPF₆, LiClO₄, LiBF₄, F₂LiNO₄S₂, C₄F₉LiO₃S, LiN(CF₃SO₂)₂, LiCF₃SO₃, C₄F₉LiO₃S, F₂LiNO₄S₂, Li(CF₃SO₂)₂C, LiH₂PO₄, LiCl, and (CH₃CO)₂Li can be used.

As the organic solvent, ethylene carbonate, propylene carbonate, dimethyl carbonate, diethyl carbonate, methylethyl carbonate, fluoroethylene carbonate, dimethoxyethane, and mixed solvents thereof can be used.

As the electrolyte, a solid electrolyte may be used. Either an inorganic-based solid electrolyte or a polymer-based solid electrolyte can be used. The inorganic -based solid electrolyte can be exemplified oxide type solid electrolytes such as Li₇La₃Zr₂O₁₂ and (La, Ti) TiO₃ and sulfide-based solid electrolytes such as Li₁₀GeP₂S₁₂. The polymer-based solid electrolyte can be exemplified various copolymers such as polyvinylidene fluoride, a vinylidene fluoride-hexafluoropropylene copolymer, and a vinylidene fluoride-ethylene copolymer.

As described above, since the present lithium-ion battery is a lithium-ion battery which includes the positive electrode 4, the negative electrode 6, and the electrolyte 8 and repeats a charge-discharge reaction by a battery electrode reaction using lithium ions as a charge carrier and a positive electrode active material 3 as is a main component of the positive electrode 4 is formed of an electrode active material produced by the above-described production method, a new and useful lithium-ion battery which contributes to recycling by effectively using a used lithium-ion battery can be easily obtained at low cost.

Besides, the present invention is not limited to the above embodiment, and various modifications can be made within the scope of the present invention. For example, in the present embodiment, the cylindrical lithium-ion battery has been described, but it is needless to say that the battery shape is not particularly limited, and the present invention can also be applied to a square type, a sheet type, a coin type. The exterior method is not also particularly limited, and a metal case, a mold resin, an aluminum laminate film may be used.

Next, examples of the present invention will be specifically described.

### EXAMPLES

### Example 1

{Preparation of sample}

### (Sample No. 1)

First, a black mass manufactured by KAWASHIMA Co., Ltd. was procured. Powders of Li₂CO₃ as a Li source, Ni(NO₃)₂·6H₂O as a Ni source, (CH₃COO)₂Mn·4H₂O as a Mn source, and Co(NO₃)₂·6H₂O as a Co source were prepared.

Then, Li₂CO₃, Ni(NO₃)₂·6H₂O, (CH₃COO)₂Mn·4H₂O, and Co(NO₃)₂·6H₂O were each weighed so that the compound ratio of Li, Ni, Mn, and Co was Li : Ni : Mn : Co = 3 : 1 : 1 : 1 in terms of molar ratio when the metal salts were mixed and synthesized, and mixed in a mortar, thereby obtaining a mixture of metal salts.

Next, 25 parts by weight of the mixture was added relative to 100 parts by weight of the black mass, and the mixture was heat-treated at a temperature of 800°C for 1 hour, and then cooled to room temperature. Then, the mixture was sieved using a stainless-steel mesh having a mesh size of 75 µm, thereby preparing a powder (electrode active material) of Sample No. 1.

Next, 2.7 g of the above powder and 6 g of N-methyl-2-pyrrolidone (hereinafter, referred to as "NMP") were mixed, and the mixture was stirred for 120 seconds using a stirring and defoaming device (MAZERUSTAR manufactured by KURABO INDUSTRIES LTD.). Thereafter, 0.15 g of carbon black (Ketjenblack EC-600-JD manufactured by Lion Corporation) as a conductive aid was added thereto, and the mixture was further stirred for 360 seconds using the stirring and defoaming device to obtain a stirred product.

Next, an NMP solution in which 5 wt% of polyvinylidene fluoride was dissolved in NMP was prepared. Then, 3.0 g of the MNP solution was added to the stirred product, and the mixture was stirred for 360 seconds using the stirring and defoaming device, then stirred for 180 seconds, further stirred for 360 seconds, and then degassed for 90 seconds, thereby obtaining a coating solution.

Subsequently, the coating solution was applied onto an Al substrate using a doctor blade method to form a coating film having a thickness of 300 µm, and then the coating film was dried at a temperature of 100°C for 8 hours, thereby preparing a positive electrode in which the Al substrate was used as a positive electrode current collector and the powder was used as a positive electrode active material.

Next, lithium metal was placed on a Cu substrate, the Cu substrate was used as a negative electrode current collector, and a negative electrode containing lithium metal as a main component of a negative electrode active material was prepared. Then, a separator made of polypropylene was interposed between the positive electrode and the negative electrode, and a carbonate-based electrolytic solution was further injected between the positive electrode and the negative electrode, thereby preparing a flat cell (simple cell for experiment) of Sample No. 1.

The flat cell was charged at a C rate of 0.1 C until the voltage reached 4.6 V and then discharged to 2.0 V. As a result, the capacity density (initial value) was 124.1 mAh/g.

### (Sample No. 2)

The black mass manufactured by KAWASHIMA Co., Ltd. used in Sample No. 1 was used as a powder of Sample No. 2, and this powder was used to prepare a flat cell of Sample No. 2 by the same method/procedure as in Sample No. 1.

The flat cell was charged and discharged by the same method/procedure as in Sample No. 1. As a result, the capacity density (initial value) was 93.7 mAh/g.

### (Sample No. 3)

A powder of Sample No. 3 was prepared by the same method/procedure as in Sample No. 1 except that only 25 parts by weight of Li₂CO₃ relative to 100 parts by weight of the black mass was added to the black mass.

Then, this powder sample was used to prepare a flat cell of Sample No. 3 and it was charged and discharged by the same method/procedure as in Sample No. 1. As a result, the capacity density (initial value) was 115.8 mAh/g.

### (Sample No. 4)

NMC111 (LiNi_{1/3}Mn_{1/3}Co_{1/3}O₂) manufactured by MTI Japan was procured, and this was designated as a powder of Sample No. 4 (reference sample).

Then, this powder was used to prepare a flat cell of Sample No. 4, and it was charged and discharged by the same method/procedure as in Sample No. 1. As a result, the capacity density (initial value) was 101.2 mAh/g.

### {Evaluation of sample}

For each of the powder of Sample Nos. 1, 2, and 4, imaging and element mapping analysis of the samples were performed using SEM-EDX (Scanning Electron Microscope - Energy Dispersive X-ray Spectrometry) (FlexSEM 1000 II manufactured by Hitachi High-Technologies Corporation), and the sample was further irradiated with a characteristic X-ray (Kα) to measure an X-ray diffraction spectrum.

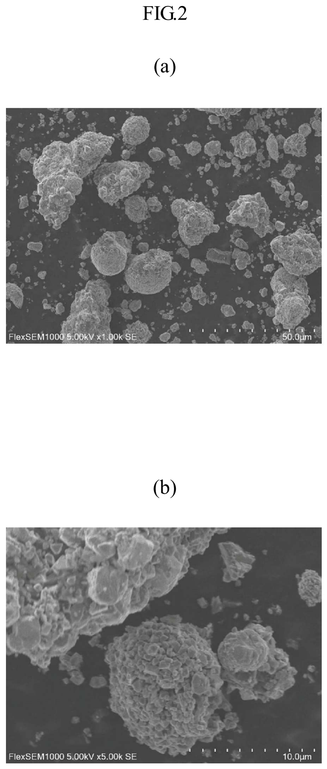

FIG. 2 shows secondary electron images of Sample No. 1 imaged at an accelerating voltage of 5.0 kV, in which FIG. 2(a) is at a magnification of 1000 times and FIG. 2(b) is at a magnification of 5000 times.

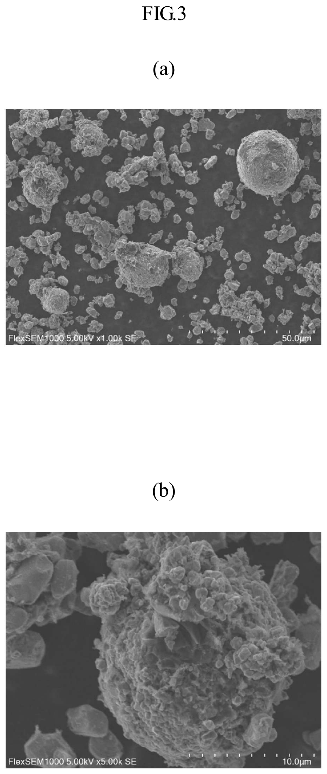

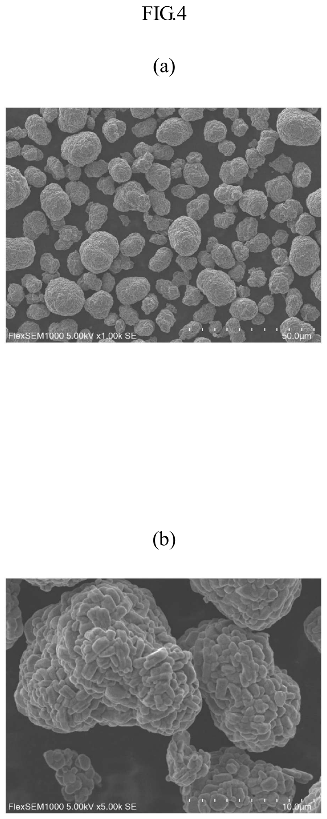

FIG. 3 shows secondary electron images of Sample No. 2 (black mass) imaged by the same method/procedure as in Sample No. 1, and FIG. 4 shows secondary electron images of Sample No. 4 (NMC111) imaged by the same method/procedure as in Sample No. 1.

That is, as is apparent from FIG. 4, Sample No. 4 is substantially uniformly dispersed as spherical or substantially rectangular aggregates having a particle size of approx. 1 µm.

On the other hand, as is apparent from FIG. 3, in Sample No. 2, aggregates of fine particles of several micrometers and submicron particles are irregularly dispersed.

In contrast, in Sample No. 1 shown by FIG. 2, since the amount of additive of the metal salt mixture was as small as 25 parts by weight relative to 100 parts by weight of the black mass, it was found that the state is closer to Sample No. 2 than to Sample No. 4 (also see FIGs. 3 and 4).

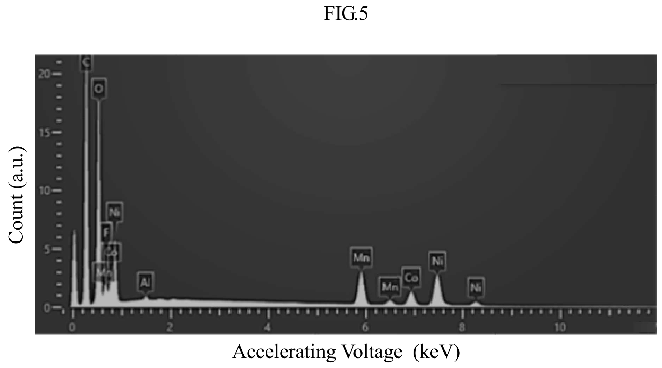

FIG. 5 shows a profile of an element mapping analysis of Sample No. 1, in which the horizontal axis represents the accelerating voltage (keV) and the vertical axis represents the number of counts (a.u.). Table 1 shows the mass fraction (mass%), standard deviation σ (%), and molar concentration (mol%) of each metal component in Sample No. 1. In Table 1, since the C element in FIG. 5 includes a carbon tape for sample fixing, the C element is excluded from the composition elements.

**[Table 1]**

| elemental species | mass fraction (mass%) | standard deviation σ (%) | molarity (mol%) |
|---|---|---|---|
| O | 41.19 | 0.17 | 71.48 |
| Mn | 14.75 | 0.12 | 7.45 |
| Co | 11.83 | 0.15 | 5.57 |
| Ni | 31.77 | 0.19 | 15.02 |
| Al | 0.46 | 0.03 | 0.47 |

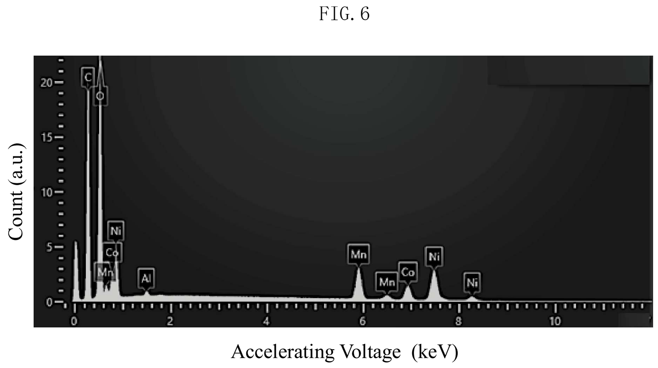

FIG. 6 shows a profile showing an element mapping analysis of Sample No. 2, in which the horizontal axis represents the acceleration voltage (keV) and the vertical axis represents the number of counts (a.u.). Table 2 shows the mass fraction (mass%), standard deviation σ (%), and molar concentration (mol%) of each metal component in Sample No. 2, and similarly to Table 1, the C element is excluded from the composition elements.

**[Table 2]**

| elemental species | mass fraction (mass%) | standard deviation σ (%) | molarity (mol%) |
|---|---|---|---|
| O | 35.02 | 0.08 | 62.32 |
| Mn | 15.44 | 0.05 | 8.00 |
| Co | 11.25 | 0.06 | 5.43 |
| Ni | 32.51 | 0.09 | 15.76 |
| F | 5.37 | 0.08 | 8.04 |
| Al | 0.41 | 0.01 | 0.44 |

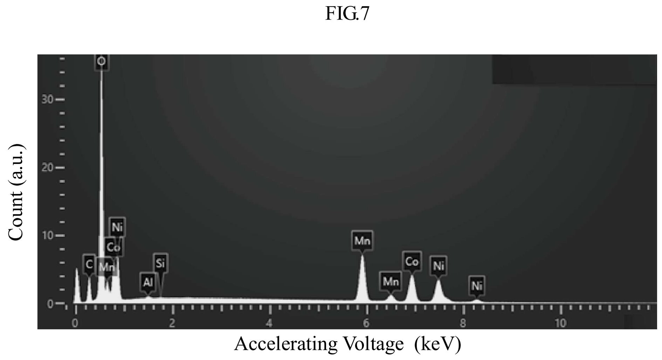

FIG. 7 shows a profile showing an element mapping analysis of Sample No. 4, in which the horizontal axis represents the accelerating voltage (keV) and the vertical axis represents the number of counts (a.u.). Table 3 shows the mass fraction (mass%), standard deviation σ (%), and molar concentration (mol%) of each metal component in Sample No. 4, and similarly to Table 1, the C element is excluded from the composition elements.

**[Table 3]**

| elemental species | mass fraction (mass%) | standard deviation σ (%) | molarity (mol%) |
|---|---|---|---|
| O | 37.37 | 0.11 | 68.12 |
| Mn | 20.26 | 0.09 | 10.76 |
| Co | 20.73 | 0.12 | 10.26 |
| Ni | 21.43 | 0.13 | 10.64 |
| Al | 0.16 | 0.02 | 0.17 |
| Si | 0.05 | 0.01 | 0.05 |

As shown in FIG. 6 and Table 2, Sample No. 2 contains a Ni component, a Mn component, and a Co component as main components similarly to the electrode active material of the present invention, and it was found that among these components, the Ni component is the largest, the Mn component is the second largest, and the Co component is the smallest. Further, it was found that the standard deviation σ of the detected components is 0.09% or less and variation is small, and furthermore, the electrode active material of the present invention contains an unnecessary F component and a small amount of an Al component.

On the other hand, as shown in FIG. 7 and Table 3, although Sample No. 4 contains a small amount of an Al component and a small amount of a Si component, it was found that the respective components of Ni, Mn, and Co are contained in substantially equal amounts, and are compounded in a molar ratio approximately as shown in the composition formula (LiNi_{1/3}Mn_{1/3}Co_{1/3}O₂).

In contrast, as shown in FIG. 5 and Table 1, Sample No. 1 contains a Ni component, a Mn component, and a Co component as main components similarly to Sample No. 2, and it was found that the Ni component is the largest, the Mn component is the second largest, and the Co component is the smallest. The F component detected for Sample No. 2 was not detected.

That is, since the amount of additive of the metal salt mixture was as small as 25 parts by weight relative to 100 parts by weight of the black mass, it was found that Sample No. 1 is closer to Sample No. 2 than to Sample No. 4 even in the results of the element analysis (also see Tables 2 and 3).

Incidentally, since the Li element is a light element, it could not be detected by SEM-EDX, but since the purpose of the element analysis is to confirm the compound state of the metal oxide, it does not particularly affect the sample evaluation.

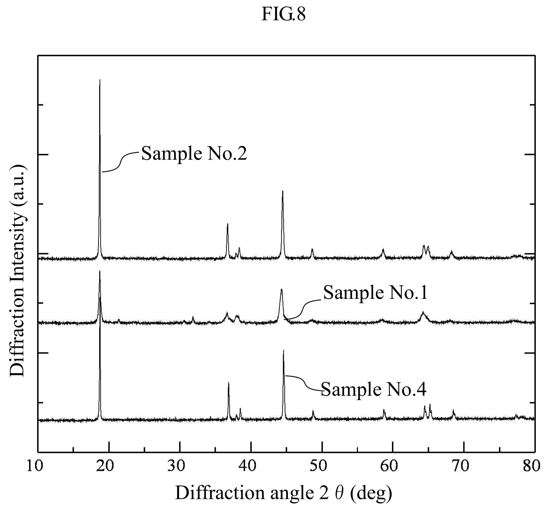

FIG. 8 is a profile of X-ray diffraction spectra in each of the powder of Sample Nos. 1, 2, and 4, in which the horizontal axis represents the diffraction angle 2θ (deg) and the vertical axis represents the diffraction intensity (a.u.).

It is known that the crystal structure of Sample No. 4 is a layered rock salt structure. Since the profiles of Sample Nos. 1 and 2 are similar to that of Sample No. 4, it is considered that the crystal structure of each of Sample Nos. 1, 2, and 4 has a layered rock salt structure. Therefore, it has been confirmed that each of these Sample Nos. 1, 2, and 4 has a crystal structure suitable for the electrode active material for a lithium-ion battery.

Then, for each of Sample Nos. 1 to 4, charging and discharging were repeated 100 times in a voltage range of 2.0 V to 4.6 V, and cycle property was evaluated, respectively.

Table 4 shows the measurement results.

**[Table 4]**

| sample No. | capacity density(mAh/g) | | | | |
|---|---|---|---|---|---|
| | initial value | cycle number(times) | | | |
| | | 10 | 25 | 50 | 100 |
| 1 | 124.1 | 108.3 | 81.3 | 64.7 | 44.6 |
| 2* | 93.7 | 87.9 | 54.8 | 44.3 | 23.2 |
| 3* | 115.8 | 81.4 | 49.8 | 23.6 | 3.9 |
| 4** | 101.2 | 73.5 | 64.8 | 60.5 | 59.2 |

| | | | | | |
|---|---|---|---|---|---|
| *present invention **reference sample (NMC111) | | | | | |

Sample No. 2 had a low initial capacity density of 93.7 mAh/g, and furthermore, the capacity density was decreased to 23.2 mAh/g at 100 cycles. That is, it was found that by repeating charging and discharging 100 times, the capacity density is decreased to approx. 25% of the initial value, and sufficient cycle property cannot be obtained.

Sample No. 3 had an initial capacity density of 115.8 mAh/g, which was higher than that of Sample No. 4. However, since it was only to add Li to the black mass and perform a heat treatment, it was found that deterioration of cycle property becomes remarkable after 25 cycles, and the capacity density is 3.9 mAh/g at 100 cycles, which decreased to about 3% of the initial value.

In contrast, Sample No. 1 has a high initial capacity density of 124.1 mAh/g, and moreover has a capacity density of 64.7 mAh/g at 50 cycles and a capacity density of 44.6 mAh/g at 100 cycles. That is, it was found that Sample No.1 can ensure 52% of the initial value at 50 cycles, and 36% of the initial value even at 100 cycles, and therefore, Sample No. 1 has excellent cycle property compared with Sample Nos. 2 and 3.

### Example 2

In Example 2, a plurality of samples having different the amounts of additive of metal salts were prepared, and the respective properties were evaluated.

### {Preparation of sample}

### (Sample No. 1a)

A powder of Sample No. 1a was prepared by the same method/procedure as in Sample No. 1 except that 10 parts by weight of the mixture of metal salts relative to 100 parts by weight of the black mass was added.

Then, this powder was used to prepare a flat cell of Sample No. 1a and it was charged and discharged by the same method/procedure as in Sample No. 1. As a result, the capacity density (initial value) was 121.8 mAh/g.

### (Sample No. 1b)

A powder of Sample No. 1b was prepared by the same method/procedure as in Sample No. 1 except that 50 parts by weight of the mixture of metal salts relative to 100 parts by weight of the black mass was added.

Then, this powder was used to prepare a flat cell of Sample No. 1b and it was charged and discharged by the same method/procedure as in Sample No. 1. As a result, the capacity density (initial value) was 106.4 mAh/g.

### (Sample No. 1c)

A powder sample of Sample No. 1c was prepared by the same method/procedure as in Sample No. 1 except that 75 parts by weight of the mixture of metal salts relative to 100 parts by weight of the black mass was added.

Then, this powder was used to prepare a flat cell of Sample No. 1c and it was charged and discharged by the same method/procedure as in Sample No. 1. As a result, the capacity density (initial value) was 88.5 mAh/g.

### {Evaluation of sample}

For each of Sample Nos. 1a to 1c, charging and discharging were repeated 100 times in a voltage range of 2.0 V to 4.6 V, and cycle property were evaluated, respectively.

Table 5 shows the measurement results. Furthermore, the cycle property of Sample No. 1 is relisted in Table 5.

**[Table 5]**

| sample No. | additive of metal salt (w/t parts) | capacity density(mAh/g) | | | | |
|---|---|---|---|---|---|---|
| | | initial value | cycle number(times) | | | |
| | | | 10 | 25 | 50 | 100 |
| 1a | 10 | 121.8 | 104.3 | 78.6 | 59.2 | 41.8 |
| 1 | 25 | 124.1 | 108.3 | 81.3 | 64.7 | 44.6 |
| 1b | 50 | 106.4 | 88.1 | 56.1 | 47.3 | 29.7 |
| 1c | 75 | 88.5 | 67.2 | 39.6 | 28.7 | 11.7 |

In Sample No. 1b, it was found that the amount of additive of the metal salt mixture is as large as 50 parts by weight relative to 100 parts by weight of the black mass, which causes an increase in cost, and the capacity density is 29.7 mAh/g at 100 cycles, which is decreased to 30% or less of the initial value.

In Sample No. 1c, since the amount of additive of the metal salt mixture was 75 parts by weight, which was further excessive, relative to 100 parts by weight of the black mass, it was found that in addition to causing higher cost, similarly to Sample No. 1b, the initial capacity density is as low as 88.5 mAh/g and the capacity density is 11.7 mAh/g at 100 cycles, which is decreased to 15% or less of the initial value.

In contrast, in Sample No. 1a, since the amount of additive of the metal salt mixture was 10 parts by weight relative to 100 parts by weight of the black mass, it was found that the initial capacity density is as high as 121.8 mAh/g, the capacity density is 41.8 mAh/g even at 100 cycles, approx. 34% of the initial value can be ensured, and excellent cycle properties substantially similar to those of Sample No. 1 can be obtained.

From the above, it was found that although the amount of additive of the metal salts is not particularly limited, it is preferably 10 to 25 parts by weight relative to 100 parts by weight of the black mass.

### Example 3

In Example 3, a plurality of samples having different heat treatment temperatures were prepared, and the respective properties were evaluated.

### {Preparation of sample}

### (Sample No. 1d)

A powder of Sample No. 1d was prepared by the same method/procedure as in Sample No. 1 except that the heat treatment temperature was set to 700°C.

Then, this powder was used to prepare a flat cell of Sample No. 1d and it was charged and discharged by the same method/procedure as in Sample No. 1. As a result, the capacity density (initial value) was 110.7 mAh/g.

### (Sample No. 1e)

A powder of Sample No. 1e was prepared by the same method/procedure as in Sample No. 1 except that the heat treatment temperature was set to 900°C.

Then, this powder was used to prepare a flat cell of Sample No. 1e and it was charged and discharged by the same method/procedure as in Sample No. 1. As a result, the capacity density (initial value) was 112.4 mAh/g.

### (Sample No. 1f)

A powder of Sample No. 1e was prepared by the same method/procedure as in Sample No. 1 except that the heat treatment temperature was set to 1000°C.

Then, this powder was used to prepare a flat cell of Sample No. 1f and it was charged and discharged by the same method/procedure as in Sample No. 1. As a result, the capacity density (initial value) was 82.1 mAh/g.

### (Sample No. 1g)

A powder of Sample No. 1g was prepared by the same method/procedure as in Sample No. 1 except that the heat treatment temperature was set to 1100°C.

Then, this powder was used to prepare a flat cell of Sample No. 1g and it was charged and discharged. As a result, the capacity density (initial value) was 82.3 mAh/g by the same method/procedure as in Sample No. 1.

### {Evaluation of sample}

For each of Sample Nos. 1d to 1g, charging and discharging were repeated 100 times in a voltage range of 2.0 V to 4.6 V, and cycle property were evaluated, respectively.

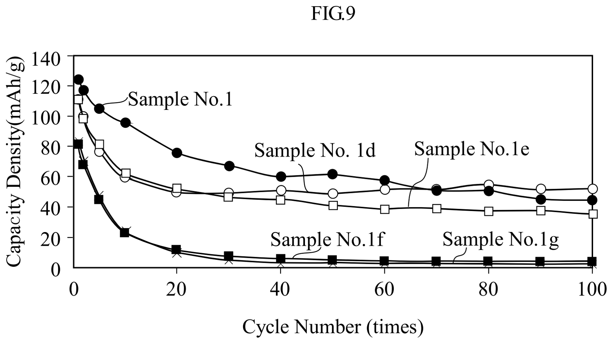

FIG. 9 is a view showing temperature dependency of cycle property, in which the horizontal axis represents the cycle number (times) and the vertical axis represents the capacity density (mAh/g). In FIG. 9, the mark "O" indicates cycle property of Sample No. 1d (heat treatment temperature: 700°C), the mark "□" indicates cycle property of the Sample No. 1e (heat treatment temperature: 900°C), the mark **"■"** indicates cycle property of the Sample No. 1f (heat treatment temperature: 1000°C), and the mark "X" indicates cycle property of the Sample No. 1g (heat treatment temperature: 1100°C). Furthermore, the mark **"•"** indicates the cycle property of Sample No. 1 (heat treatment temperature: 800°C).

As is apparent from FIG. 9, it was found that Sample Nos. 1f and 1g have excessively high heat treatment temperatures of 1000°C and 1100°C, respectively, and thus the initial capacity density is low, and cycle property remarkably deteriorate and are extremely lowered at approx. 20 cycles. It is considered that this is because crystallization excessively proceeds due to an excessively high heat treatment temperature, and the insertion/desorption reaction of Li ions is inhibited.

In contrast, in Sample Nos. 1d and 1e, the heat treatment temperatures were 700°C and 900°C, which were appropriate for the progress of crystallization, and it was found that excellent cycle property can be obtained as with Sample No. 1.

From the above, it was found that the heat treatment temperature is preferably 700°C to 900°C.

### Example 4

In Example 4, a plurality of samples having different heat treatment times were prepared, and the respective properties were evaluated.

### {Preparation of sample}

### (Sample No. 1h)

A powder of Sample No. 1h was prepared by the same method/procedure as in Sample No. 1 except that the heat treatment time was set to 0.5 hours.

Then, this powder was used to prepare a flat cell of Sample No. 1h and it was charged and discharged by the same method/procedure as in Sample No. 1. As a result, the capacity density (initial value) was 117.6 mAh/g.

### (Sample No. 1i)

A powder of Sample No. 1i was prepared by the same method/procedure as in Sample No. 1 except that the heat treatment time was set to 1 hour.

Then, this powder was used to prepare a flat cell of Sample No. 1i and it was charged and discharged by the same method/procedure as in Sample No. 1. As a result, the capacity density (initial value) was 121.3 mAh/g.

### (Sample No. 1j)

A powder of Sample No. 1j was prepared by the same method/procedure as in Sample No. 1 except that the heat treatment time was set to 4 hours.

Then, this powder was used to prepare a flat cell of Sample No. 1j and it was charged and discharged by the same method/procedure as in Sample No. 1. As a result, the capacity density (initial value) was 109.2 mAh/g.

### {Evaluation of sample}

For each of Sample Nos. 1h to 1j, charging and discharging were repeated 100 times in a voltage range of 2.0 V to 4.6 V, and cycle property were evaluated, respectively.

Table 6 shows the measurement results. Furthermore, the cycle property of Sample No. 1 is relisted in Table 6.

**[Table 6]**

| sample No. | Time for heat treatment (hr) | capacity density(mAh/g) | | | | |
|---|---|---|---|---|---|---|
| | | initial value | cycle number(times) | | | |
| | | | 10 | 25 | 50 | 100 |
| 1h | 0.5 | 117.6 | 91.2 | 69.9 | 53.1 | 37.4 |
| 1 | 1.0 | 124.1 | 108.3 | 81.3 | 64.7 | 44.6 |
| 1i | 2.0 | 121.3 | 105.2 | 79.8 | 60.3 | 42.8 |
| 1j | 4.0 | 109.2 | 91.4 | 68.7 | 49.6 | 29.3 |

Sample No. 1h had a capacity density of 37.4 mAh/g at 100 cycles, which was decreased to approx. 32% of the initial value. It is considered that crystallization is not progressed sufficiently since the heat treatment time is as short as 0.5 hours in Sample No.1h.

Sample No. 1j had a capacity density of 29.3 mAh/g at 100 cycles, which was decreased to approx. 27% of the initial value. It is considered that the heat treatment time is as long as 4.0 hours, so that crystallization is progressed excessively, and insertion/desorption reaction of the Lithium ion has been inhibited.

In contrast, Sample No. 1i had a heat treatment time of 2 hours, and it was found that cycle property substantially similar to those of Sample No. 1 (heat treatment time: 1 hour) can be obtained.

From the above, it was found that the heat treatment time is preferably 1 to 2 hours.

### Example 5

In Example 5, a plurality of samples having different compound ratios of metal sources were prepared, and the respective properties were evaluated.

### {Preparation of sample}

### (Sample No. 11)

In the same manner as in Sample No. 1, powders of Li₂CO₃ as a Li source, Ni(NO₃)₂·6H₂O as a Ni source, (CH₃COO)₂Mn·4H₂O as a Mn source, and Co(NO₃)₂·6H₂O as a Co source were prepared. Then, Li₂CO₃, Ni(NO₃)₂·6H₂O, (CH₃COO)₂Mn·4H₂O, and Co(NO₃)₂·6H₂O were each weighed so that the compound ratio of Li, Ni, Mn, and Co was Li : Ni : Mn : Co = 1 : 0.4 : 0.3 : 0.3 in terms of molar ratio when the plurality of metal salts were mixed and synthesized, and mixed in a mortar, thereby obtaining a mixture of metal salts. Thereafter, powder of Sample No. 11 was prepared by the same method/procedure as in Sample No. 1.

Then, this powder was used to prepare a flat cell of Sample No. 11 and the flat cell was charged and discharged by the same method/procedure as in Sample No. 1. As a result, the capacity density (initial value) was 116.7 mAh/g (specimen name: NMC443).

### (Sample No. 12)

Li₂CO₃, Ni(NO₃)₂·6H₂O, (CH₃COO)₂Mn·4H₂O, and Co(NO₃)₂·6H₂O were each weighed so that the compound ratio of Li, Ni, Mn, and Co was Li : Ni : Mn : Co = 1 : 0.5 : 0.3 : 0.2 in terms of molar ratio when the plurality of metal salts were mixed and synthesized, and mixed in a mortar, thereby preparing a mixture of metal salts. Thereafter, a powder of Sample No. 12 was prepared by the same method/procedure as in Sample No. 1.

Then, this powder sample was used to prepare a flat cell of Sample No. 12 and the flat cell was charged and discharged by the same method/procedure as in Sample No. 1. As a result, the capacity density (initial value) was 119.4 mAh/g (specimen name: NMC523).

### (Sample No. 13)

Li₂CO₃, Ni(NO₃)₂·6H₂O, (CH₃COO)₂Mn·4H₂O, and Co(NO₃)₂·6H₂O were weighed so that the compound ratio of Li, Ni, Mn, and Co was Li: Ni: Mn: Co = 1: 0.6: 0.2: 0.2 in terms of molar ratio when the plurality of metal salts were mixed and synthesized, and mixed in a mortar, thereby preparing a mixture of metal salts. Thereafter, a powder of Sample No. 13 was prepared by the same method/procedure as in Sample No. 1.

Then, this powder was used to prepare a flat cell of Sample No. 13 by the same method/procedure as in Sample No. 1, and the flat cell was charged and discharged. As a result, the capacity density (initial value) was 126.8 mAh/g (specimen name: NMC622).

### (Sample No. 14)

Li₂CO₃, Ni(NO₃)₂·6H₂O, (CH₃COO)₂Mn·4H₂O, and Co(NO₃)₂·6H₂O were weighed so that the compound ratio of Li, Ni, Mn, and Co was Li: Ni: Mn: Co = 1: 0.8: 0.1: 0.1 in terms of molar ratio when the plurality of metal salts was mixed and synthesized, and mixed in a mortar, thereby preparing a mixture of metal salts. Thereafter, a powder of Sample No. 14 was prepared by the same method/procedure as in Sample No. 1.

Then, this powder was used to prepare a flat cell of Sample No. 14 and the flat cell was charged and discharged by the same method/procedure as in Sample No. 1. As a result, the capacity density (initial value) was 132.8 mAh/g (specimen name: NMC811).

### (Sample No. 15)

AlCl₃·6H₂O was prepared as an Al source instead of (CH₃COO)₂Mn·4H₂O as a Mn source. Then, Li₂CO₃, Ni(NO₃)₂·6H₂O, Co(NO₃)₂·6H₂O, and AlCl₃·6H₂O were each weighed so that the compound ratio of Li, Ni, Co, and Al was Li: Ni: Co: Al = 1: 0.8: 0.15: 0.05 in terms of molar ratio when the plurality of metal salts were mixed and synthesized, and mixed in a mortar, thereby preparing a mixture of metal salts. Thereafter, a powder of Sample No. 15 was prepared by the same method/procedure as in Sample No. 1.

Then, this powder was used to prepare a flat cell of Sample No. 15 and the flat cell was charged and discharged by the same method/procedure as in Sample No. 1. As a result, the capacity density (initial value) was 130.6 mAh/g (specimen name: NCA).

### (Sample No. 16)

Li₂CO₃, Ni(NO₃)₂·6H₂O, (CH₃COO)₂Mn·4H₂O, and Co(NO₃)₂·6H₂O were each weighed so that the compound ratio of Li, Ni, Mn, and Co was Li: Ni: Mn: Co = 1.2: 0.13: 0.54: 0.13 in terms of molar ratio when the plurality of metal salts was mixed and synthesized, and mixed in a mortar, thereby preparing a mixture of metal salts. Thereafter, a powder of Sample No. 16 was prepared by the same method/procedure as in Sample No. 1.

Then, this powder was used to prepare a flat cell of Sample No. 16 in which the positive electrode active material was formed of a lithium-rich composition and it was charged and discharged by the same method/procedure as in Sample No. 1. As a result, the capacity density (initial value) was 187.6 mAh/g (specimen name: LR-NMC).

### {Evaluation of sample}

For each of Sample Nos. 11 to 16, charging and discharging were repeated 100 times in a voltage range of 2.0 V to 4.6 V, and cycle property were evaluated, respectively.

Table 7 shows the measurement results.

**[Table 7]**

| sample No. | specimen | capacity density(mAh/g) | | | | |
|---|---|---|---|---|---|---|
| | | initial value | cycle number(times) | | | |
| | | | 10 | 25 | 50 | 100 |
| 11 | NMC433 | 116.7 | 99.8 | 74.8 | 55.2 | 34.9 |
| 12 | NMC523 | 119.4 | 102.3 | 78.1 | 60.4 | 40.5 |
| 13 | NMC622 | 126.8 | 110.7 | 84.7 | 66.8 | 47.1 |
| 14 | NMC811 | 132.8 | 112.4 | 79.8 | 58.3 | 37.6 |
| 15 | NCA | 130.6 | 112.7 | 85.9 | 66.8 | 46.2 |
| 16 | LR-NMC | 187.6 | 169.4 | 136.3 | 88.7 | 51.8 |

As is apparent from Table 7, Sample Nos. 11 to 16 were 55.2 to 88.7 mAh/g even at 50 cycles, and the battery capacity of 44 to 51% of the initial capacity density could be secured.

From the above, it was found that a lithium-ion battery can be obtained with high practicality at low cost even when the compound ratio of each metal component is variously changed depending on the application.

### INDUSTRIAL APPLICABILITY

By adding a predetermined metal salt to a black mass obtained from a used lithium-ion battery, a new and useful electrode active material using the black mass is produced without requiring time and effort to recover the metal salt and the metal material.

### REFERENCE SIGHS LIST

- 3: Positive electrode active material (electrode active material)
- 4: Positive electrode
- 5: Negative electrode active material
- 6: Negative electrode
- 8: Electrolytic solution (electrolyte)

## Claims

1. A method for producing an electrode active material, the method comprising:
adding a plurality of metal salts containing each metal component of Li, Ni, Co, and Mn or Al to a black mass obtained by processing a used lithium-ion battery; and
performing a heat treatment to react the black mass with the metal salts to produce an electrode active material.

2. The method for producing an electrode active material according to claim 1, wherein an amount of additive of the metal salts is 10 to 25 parts by weight relative to 100 parts by weight of the black mass.

3. The method for producing an electrode active material according to claim 1 or 2, wherein the heat treatment is performed at a temperature of 700°C to 900°C.

4. The method for producing an electrode active material according to claim 1 or 2, wherein the heat treatment is performed for 1 to 2 hours.

5. The method for producing an electrode active material according to claim 1 or 2, wherein the plurality of metal salts are added to the black mass with a compound ratio adjusted so that one oxide selected from the group consisting of LiNi_{1/3}Mn_{1/3}CO_{1/3}O₂, LiNi_{0.4}Mn_{0.3}CO_{0.3}O₂, LiNi_{0.5}Mn_{0.3}CO_{0.2}O₂, LiNi_{0.5}Mn_{0.2}CO_{0.3}O₂, LiNi_{0.6}Mn_{0.2}CO_{0.2}O₂, LiNi_{0.8}Mn_{0.1}Co_{0.1}O₂, LiNi_{0.8}Co_{0.15}Al_{0.05}O₂, and a lithium-rich composition represented by general formula:
Li₁₊ₓNi_{2/(3+3y)}Mn_{2x/(3+3y)}CO_{2/(3+3y)}O₂ (where x > 0, and y is a positive integer) can be formed when the plurality of metal salts are mixed and synthesized.

6. An electrode having an electrode active material produced by the production method according to claim 1 or 2.

7. An electrode according to claim 6, wherein a crystal structure of the electrode active material is a layered rock salt type.

8. A lithium-ion battery comprising:
a positive electrode;
a negative electrode, and an electrolyte;
wherein the lithium-ion battery is configured to repeat a charge-discharge reaction by a battery electrode reaction using a lithium ion as a charge carrier;
a positive electrode active material as a main component of the positive electrode includes the electrode active material produced by the production method according to claim 1 or 2.

9. The lithium-ion battery according to claim 8, wherein a negative electrode active material as a main component of the negative electrode includes at least one selected from the group consisting of lithium metal, graphite, graphene, and lithium titanate.
